# Europäisches Patentamt
# European Patent Office
# Office européen des brevets

(19)

(11) Veröffentlichungsnummer: **0 118 461**
**B1**

(12) ## EUROPÄISCHE PATENTSCHRIFT

(45) Veröffentlichungstag der Patentschrift:
**19.03.86**

(51) Int. Cl.⁴: **C 10 B 39/02**

(21) Anmeldenummer: **83902245.6**

(22) Anmeldetag: **22.07.83**

(86) Internationale Anmeldenummer:
**PCT/DE 83/00128**

(87) Internationale Veröffentlichungsnummer:
**WO 84/00557 (16.02.84 Gazette 84/5)**

(54) SCHACHTKÜHLER ZUM TROCKENLÖSCHEN VON KOKS.

(30) Priorität: **29.07.82 DE 3228291**
**18.03.83 DE 3309695**

(43) Veröffentlichungstag der Anmeldung:
**19.09.84 Patentblatt 84/38**

(45) Bekanntmachung des Hinweises auf die Patenterteilung:
**19.03.86 Patentblatt 86/12**

(84) Benannte Vertragsstaaten:
**FR**

(56) Entgegenhaltungen:
**EP - A - 0 033 874**
**DE - B - 1 471 589**

(73) Patentinhaber: **Dr. C. Otto & Comp. Gesellschaft mit beschränkter Haftung, Christstrasse 9 Postfach 10 18 50, D-4630 Bochum 1 (DE)**

(72) Erfinder: **TIETZE, Jürgen, Saladin-Schmitt-Strasse 30, D-4630 Bochum 1 (DE)**
Erfinder: **DANGUILLIER, Wilhelm, Friederikastrasse 88, D-4630 Bochum (DE)**
Erfinder: **THUBEAUVILLE, Heinz, Ministerstrasse 18, D-4630 Bochum (DE)**
Erfinder: **POHL, Siegfried, Am Dornbusch 13, D-4630 Bochum (DE)**
Erfinder: **MÜLLER, Friedrich, Hauptstrasse 224, D-4690 Herne 2 (DE)**

(74) Vertreter: **Radt, Finkener, Ernesti Patentanwälte, Heinrich-König-Strasse 119, D-4630 Bochum 1 (DE)**

LIBER, STOCKHOLM 1986

## Beschreibung

Die Erfindung betrifft einen Schachtkühler zum Trockenlöschen von Koks und anderen stückigen Brennstoffen mit einer aus feuerfesten Steinen gebildeten vertikalen Kammer, die einen oberen konischen Abschnitt mit einer zentralen Beschickungsöffnung und darunter einen im wesentlichen zylindrischen Abschnitt mit einer unteren Austragsöffnung aufweist, wobei ein im oberen Bereich des zylindrischen Abschnittes befindlicher Ringsammelkanal innen von einem ringförmigen Einbau begrenzt ist, der an seinem oberen Ende an der Wandung des zylindrischen Abschnittes verankert ist und an seinem unteren Ende über in Umfangsrichtung mit Abstand voneinander angeordneten radialen Stegen mit der Innenwandung des zylindrischen Abschnittes in Verbindung steht, wobei die Freiräume zwischen den Stegen Gasabzugsöffnungen bilden.

Bei einem aus der DE-AS 14 71 589 bekannten Schachtkühler dieser Art ist das aus feuerfesten Steinen aufgebaute Mauerwerk auf der ganzen Höhe der Kammer zusammenhängend ausgeführt. Wie die Praxis gezeigt hat, ist bei einer solchen Bauausführung der Bereich des Mauerwerkes unterhalb der Gasabzugsöffnungen besonders gefährdet und daher als Schwachstelle anzusehen. Ursache hierfür sind vor allem die spezifisch hohen Druckbelastungen, die durch das Gewicht des oberhalb der Gasabzugsöffnungen befindlichen inneren Mauerwerks verursacht werden. Während des Betriebs sind an diesen Stellen erhebliche Zusammenbrüche aufgetreten, die Anlaß für unliebsame Störungen und Betriebsunterbrechungen waren. Um den Auflagerdruck an den Stützwänden im Bereich der Gasabzugsöffnungen zu verringern, wurde auch bereits vorgeschlagen, das Mauerwerk im konischen Teil leichter auszuführen. Weiter sind Versuche bekanntgeworden, das Steingewicht des konischen Abschnittes stärker auf das Mantelmauerwerk außerhalb des Ringsammelkanals abzuleiten. Zufriedenstellende Verbesserungen sind bislang nicht bekanntgeworden.

Aus der EP-A-0 033 874 ist ein Schachtkühler bekannt, bei dem der ringförmige Einbau, der den Ringsammelkanal begrenzt, eine Konusform mit nach unten zeigender Konusspitze hat. Er besteht außen aus einem Mantel aus einem hitzebeständigen metallischen Werkstoff, der an seiner Innenseite mit einer Verschleiß und Hitzeschutzschicht ausgekleidet ist. Dieser ringförmige Einbau ist nur an seinem oberen Ende über eine geeignete Befestigungsvorrichtung mit dem Oberteil des Schachtkühlers verbunden.

Der Erfindung liegt die Aufgabe zugrunde, einen Schachtkühler zum Trockenlöschen von Koks in der zuerst beschriebenen Ausführung, d.h. in einer Ausführung, bei der der ringförmige Einbau einen gleichbleibenden inneren Querschnitt hat und somit einen Hohlzylinder darstellt, konstruktiv zu verbessern. Hierbei geht es vor allen um eine leichtere und weniger komplizierte Konstruktion des aus Mauerwerk gebildeten ringförmigen Einbaues. Weiter soll durch diese Konstruktion die Koksschüttung dahingehend beeinflußt werden, daß sich vor den Gasabzugsöffnungen im Vergleich zu der erwähnten bekannten Ausführung eine erheblich größere freie Oberfläche der Koksschüttung einstellen kann, um so einen geringeren Austrag an Koksstaub zu erreichen.

Diese Aufgabe wird bei einem Schachtkühler der eingangs beschriebenen Art erfindungsgemäß dadurch gelöst, daß der ringförmige Einbau einen aus Mauerwerk gebildeten Hohlzylinder darstellt und an zur Schachtachse parallelen Rohrankern aufgehängt ist, die sich in Verbindung mit dem Mauerwerk vom unteren Rand desselben nach oben erstrecken und an ihren oberen Enden durch das Mauerwerk des konischen Abschnittes geführt und an Halterungen befestigt sind, die sich auf den oberen Rand des Mauerwerks des zylindrischen Abschnittes abstützen.

Ein wesentlicher Vorteil, der durch die Erfindung erzielt wird, ist darin zu sehen, daß bei einem aus Mauerwerk gebildeten ringförmigen Einbau in Zylinderfrom, ähnlich wie bei dem bekannten ringförmigen Einbau in Konusform, die Gewichtsbelastung nicht mehr durch eine Abstützung an seinem unteren Ende auf das Mantelmauerwerk in Bereich der Gasabzugsöffnungen, sondern auf den oberen Rand des Mantelmauerwerks übertragen wird. Erreicht wird dies dadurch, daß der gesamte innere Einbau an seinem unteren Rand an parallelen Rohrankern aufgehängt ist, die an ihren oberen Enden an Halterungen befestigt sind, die die Gewichtsbelastung auf den Rand des Mauerwerks übertragen. Diese Ausgestaltung bietet den weiteren Vorteil, daß nun auch bei einem aus Mauerwerk gebildeten ringförmigen Einbau dieser als selbständiger Baukörper sich unabhängig vom Mauerwerk des äußeren Schachtes ausdehnen kann, wodurch Wärmespannungen, wie sie an ungleich starken, ineinandergreifenden Mauerwerksteilen zu beobachten sind, vermieden werden. Auch für evtl. notwendige Reparaturen bietet ein selbständig ausgeführter Mauerwerksbauteil wesentliche Vorteile.

Die Aufhängung des ringförmigen Einbaus aus Mauerwerk und damit der Fortfall einer unteren Abstützung bietet ferner die Möglichkeit, die Eingänge der Gasabzugsöffnungen aus dem Bereich der Ebene der Innenwand nach außen zu verlegen, wie dies auch bei dem ringförmigen Einbau in Konusform der Fall ist. Somit kann die Koksschüttung an der Übergangsstelle, d.h. am unteren Rand des ringförmigen Einbaus eine dem Schüttwinkel entsprechende, relativ große freie Oberfläche bilden. Dies führt zu einer Verringerung der Austrittsgeschwindigkeit der Kühlgase und somit zu einem geringeren Austrag an Koksstaub. Dessen schädlicher Einfluß auf die nachgeschalteten Anlagen, wie Dampfkessel, Gebläse oder dergleichen, wird hierdurch erheblich gemindert.

Die Rohranker, an denen das Ringmauerwerk angehängt ist, können unterschiedlich ausgebildet und angeordnet sein, beispielsweise innerhalb des Mauerwerkes oder außerha1b desselben. Soweit die Rohranker im Innern des Mauerwerkes verlaufen, ist eine Kühlung durch ein hindurchgeleitetes Medium wie Gas oder Wasser vorgesehen. Für ein von außen zugeführtes Kühlmedium ist es zweckmäßig die Rohranker aus einem unten geschlossenen Außenrohr und einem etwa gleichlangen unten offenen Innenrohr auszubilden, wobei das obere Ende des Innenrohres den Ein-laß und das obere Ende des Außenrohres den Auslaß für ein umwälzbares Kühlmedium bildet. Hierbei sind die Einlässe aller Innenrohre an eine Ringsammelleitung für die Zufuhr und die Auslässe aller Außenrohre an eine zweite Ringsammelleitung für die Abfuhr des Kühlmediums angeschlossen.

Zur Kühlung der Rohranker kann ebensogut das Kühlgas aus dem Kreislauf des Verfahrens benutzt werden. In einem solchen Fall sind die Rohranker als unten offene Einzelrohre ausgebildet die mit ihrem Ende jeweils an eine in das Innere der Kammer mündende Öffnung im Ringmauerwerk anschließen. Das in die Rohranker eingeleitete Kühlgas tritt an diesen Stellen in das Innere des Schachtkühlers und vermischt sich hier mit dem für den Kühlpro-zeß von unten zugeführten Kühlgas.

Zur Übertragung der Gewichtsbelastung von den Rohrankern auf den oberen Rand des Mantelmauerwerkes des Schachtkühlers sind die oberen Enden der Rohranker in einer geeigneten Halterung befestigt. Bei einem Schachtkühler, bei dem der obere konische Abschnitt außen von einer Blechhaube umgeben ist, die an ihrem unteren Rand mit einer Auflagerplatte verbunden ist, wird die Halterung zweckmäßigerweise wie folgt ausgebildet. Für jeden einzelnen Rohranker wird in der Blechhaube in einer Ausnehmung ein senkrecht stehender Rohrstutzen angebracht und an der Blechhaube vorzugsweise durch Schweißen befestigt. Jeder Rohrstutzen dient hierbei zur Aufnahme des oberen Endes eines Rohrankers, der an seiner Wandung einen angeschweißten Bund trägt und mit diesem Bund auf dem freien Ende des Rohrstutzens aufliegt. Diese Halterung kann zweckmäßigerweise durch Versteifungsrippen zusätzlich verstärkt werden. Diese Versteifungsrippen werden im Innern der Blechhaube angeordnet und erstrecken sich von der Innenwandung der Haube senkrecht nach unten bis zur Auflagerplatte wobei sie an der Haube sowie am Rohrstutzen und an der Auflagerplatte angeschweißt werden.

· Nach einer anderen zweckmäßigen Weiterbildung sind an den Rohrankern an ihren unteren Enden Ansätze wie Ringscheiben oder dergleichen vorzugsweise durch Schweißen befestigt. Solche Ansätze begünstigen das Einbinden der Rohranker im Mauerwerk und tragen damit zur Verbesserung der Einleitung der Gewichtsbelastung in die Rohranker bei.

Für die Aufhängung des Ringmauerwerkes können anstelle von inneren Rohrankern auch an der Außenwandung des Mauerwerkes verlaufende Rohranker benutzt werden. Bei außenlie-genden Rohrankern ist es zweckmäßig, die Rohre auf ihrer ganzen Länge durch Stege zu einem geschlossenen Stahlring miteinander zu verbinden. Eine solche Rohrwand ist unter der Bezeichnung Flossenrohrwand aus dem Kesselbau bekannt. Dabei handelt es sich um Siederohre, die durch Stege miteinander verbunden sind und an ihren Enden an je einem Ringrohr angeschlossen sind.

Auch bei dem nach der Erfindung vorgesehenen Stahlring, der das Ringmauerwerk umschließt, ist an den Enden der Einzelrohre je ein Ringrohr als Sammler angeschweißt, so daß die Innenräume aller Einzelrohre an ihren Enden untereinander in Verbindung stehen. Das untere Ringrohr wird zweckmäßigerweise in einem aus Formsteinen gebildeten Kranz eingebunden, der als Auflager für das darüberliegende Mauerwerk dient, welches bei dieser Konstruktion aus gängigen Radialsteinen aufgebaut sein kann. Formsteine werden lediglich für den unteren Kranz benötigt, in dem das untere Ringrohr des Stahlringes eingebettet ist. Zur Vergrößerung der Angriffsfläche kann es zweckmäßig sein am unteren Ringrohr in waagerechter Richtung vorstehende Ansätze in durchgehender oder unterbrochener Form anzubringen.

Die Halterung des Stahlringes im oberen konischen Abschnitt des Schachtkühlers ist in gleicher Weise ausgebildet wie bei der zuerst beschriebenen Ausführungsform. Zu diesem Zweck sind an dem oberen Ringrohr nach oben ragende Rohranker angeschweißt, die als Steigeleitungen dienen und sich in den Rohrstutzen der Blechhaube des konischen Abschnittes wie vorstehend beschrieben abstützen.

Die geschlossene Rohrwand kann vorteilhaft als Wärmetauscher in den Verdampferteil des Abhitzekessels des Schachtkühlers eingebunden werden. Hierzu ist an der unteren Ringleitung wenigstens ein Anschlußstutzen für den Anschluß der Speisewasserleitung vorgesehen. Die nach oben ragenden Steigeleitungen sind unmittelbar an den Verdampferteil des Abhitzekessels angeschlossen. Das im Ringsammelkanal strömende Heißgas gibt einen Teil seiner Wärme an die Rohrwand ab und trägt so zur Dampferzeugung bei. Die Absenkung der Temperatur des Heißgases wird ca. 30 bis 60° C betragen. Hieraus resultiert eine Verringerung des Volumens des Heißgases, die insofern von Vorteil ist, als die nachgeschalteten Aggregate entsprechend kleiner dimensioniert werden können.

Ein weiterer Vorteil der außenliegenden Rohrwand ist darin zu sehen, daß der geschlossene Stahlring das innenliegende Mauerwerk auch gegen den Druck abstützt, der aus der Koksschüttung im Innern der Vorkammer resultiert. Weiterhin ergibt sich durch die außenliegende Anordnung der Rohrwand eine bessere Isolierung der Vorkammer, so daß ihre Funktion als Wärmespeicher zum Ausgleich von Betriebsschwankungen voll erhalten bleibt.

Ausführungsbeispiele der Erfindung sind in der Zeichnung dargestellt und werden nachfolgend näher erläutert. Es zeigt:

Fig. 1 einen Längsschnitt eines Schachtkühlers, bei dem das Ringmauerwerk im Bereich der Vorkammer an inneren Rohrankern aufgehangt ist,

Fig. 2 einen Querschnitt des Schachtkühlers in der Ebene der Linie I-I der Fig. 1,

Fig. 3 eine Schnittansicht der Halterung eines Rohrankers an seinem oberen Ende in einem größeren Maßstab,

Fig. 4 einen Längsschnitt im Bereich des unteren Endes eines Rohrankers mit einem Innenrohr,

Fig. 5 einen Längsschnitt im Bereich des unteren Endes eines Rohrankers in Form eines unten offenen Rohres,

Fig. 6 einen Längsschnitt eines Schachtkühlers, bei dem das Ringmauerwerk im Bereich der Vorkammer an einer Rohrwand aufgehangt ist, und

Fig. 7 einen Querschnitt eines Teils der Wandung im Bereich der Vorkammer in der Ebene der Linie II-II der Fig. 6, in einem größeren Maßstab.

Bei den dargestellten Ausführungsbeispielen enthält der aufrechtstehende, im wesentlichen zylindrische Schachtkühler im unteren Teil die eigentliche Trockenkammer 1, darüber eine Vorkammer 2 und über dieser einen konischen Abschnitt 3 mit einer zentralen Beschickungsöffnung 4. Die Wandung 5 im zylindrischen Teil und die Wandung 6 im konischen Abschnitt sind aus feuerfesten Steinen gebildet. Die Wandung 5 des Schachtkühlers ruht auf einem ringförmig ausgebildeten Fundament 7. An die Trockenkammer 1 schließt sich an ihrem unteren Ende ein Trichter 8 an, der in eine nicht dargestellte Austragsöffnung für den getrockneten Koks übergeht. über eine an den Trichter 8 in seinem unteren Bereich angeschlossene Rohrleitung wird das Trockengas in das Innere des Schachtkühlers eingeleitet.

In der Höhe der Vorkammer 2 befindet sich im Mauerwerk ein Ringsammelkanal 9, von dem an einer Stelle des Umfangs eine Austrittsöffnung 10 ausgeht. Die innere Begrenzung des Ringsammelkanals 9 bildet ein Ringmauerwerk 11, welches als selbständiger Baukörper ausgeführt und an einer Vielzähl von Rohrankern 12 aufgehangt ist.

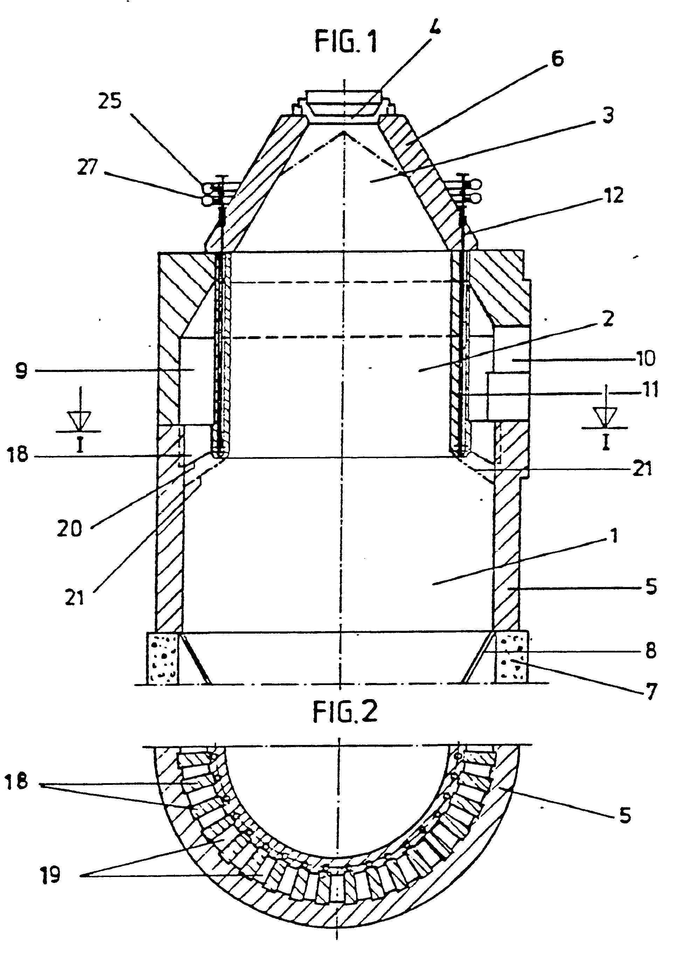

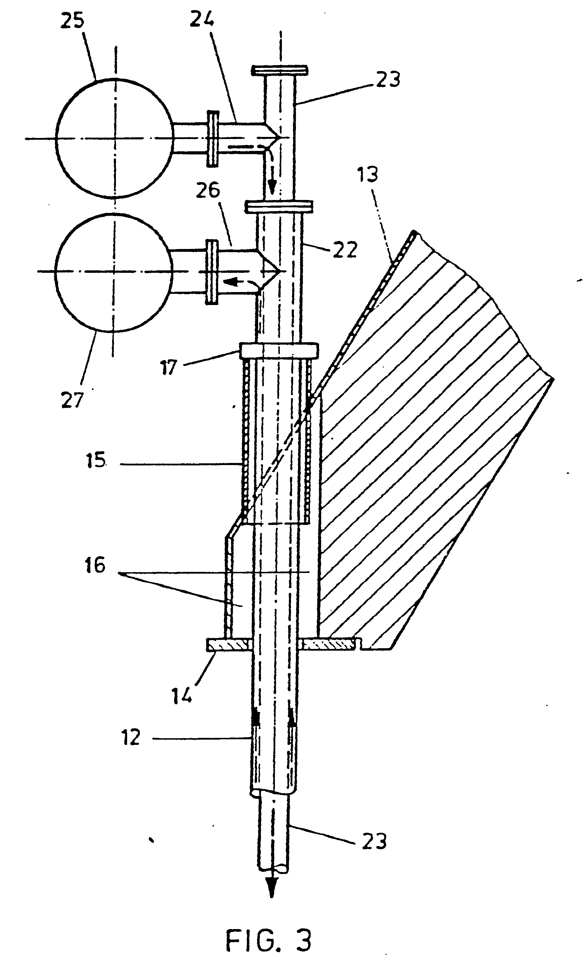

Bei der Ausführungsform nach Fig. 1 verlaufen die Rohranker 12 im Innern des Ringmauerwerkes 11. Sie sind auf dem ganzen Umfang mit gleichem Abstand voneinander angeordnet und an ihren oberen Enden mittels einer Halterung auf dem Mantelmauerwerk der Wandung 5 abgestützt. Die Ausgestaltung einer solchen Halterung ist in Fig. 3 veranschaulicht.

Die Wandung 6 des konischen Abschnittes ist außen von einer konischen Blechhaube 13 überzogen, deren unterer Rand auf einer Auflagerplatte 14 durch Schweißen befestigt ist, die ihrerseits auf der oberen Stirnfläche der Wandung 5 des Mantelmauerwerks aufliegt. In einer Ausnehmung in der Blechhaube 13 ist ein senkrecht stehender Rohrstutzen 15 angebracht, der mit der Blechhaube 13 durch Schweißen fest verbunden ist. Innerhalb der Blechhaube 13 sind neben den Rohrstutzen 15 radiale Versteifungsrippen 16 vorgesehen, die an der Blechhaube 13 und an der Auflagerplatte 14 verschweißt sind.

Jeder einzelne Rohrstutzen 15 dient zur Aufnahme eines Rohrankers 12, der einen Bund 17 trägt mit dem er auf der Oberfläche des Rohrstutzens 15 aufliegt. Von hier ab verläuft der Rohranker frei, d.h. ohne Verbindung mit den Teilen, die er durchdringt bis in das darunter liegende Ringmauerwerk 11. Die Rohranker sind somit einer Zugbeanspruchung ausgesetzt und übertragen die Gewichtsbelastung des Ringmauerwerkes 11 über den Bund 17 auf die Blechhaube 13 und von hier über die Auflagerplatte 14 auf das Mantelmauerwerk des Schachtkühlers.

Am unteren Ende ist das Ringmauerwerk 11 durch radiale Stege 18 gegen die Wandung 5 abgestützt. Die Stege sind mit gleichmäßigem Abstand voneinander auf dem ganzen Umfang angeordnet. Die freien Querschnitte zwischen den Stegen 18 bilden Öffnungen 19 für den Eintritt des Gases in den darüberliegenden Ringsammelkanal 9. Der Durchtrittsquerschnitt der Öffnungen 19 kann durch Schiebersteine verändert werden. Bei dem dargestellten Ausführungsbeispiel entspricht die Weite der freien Querschnitte in der Umfangsrichtung etwa der Dicke der Stege 18. Ausgeführt sind die Stege 18 aus feuerfesten Steinen, aus denen auch das übrige Mauerwerk besteht. Die untere Begrenzungskante 20 der Stege 18 hat einen von innen nach außen geneigten Verlauf, der etwa der Konturlinie der Koksschüttung 21 entspricht, die in Fig. 1 auf beiden Seiten durch strichpunktierte Linien angedeutet ist. Der abwärtsrutschende Koks kommt auf diese Weise mit der Unterkante der Stege 18 nicht in Berührung.

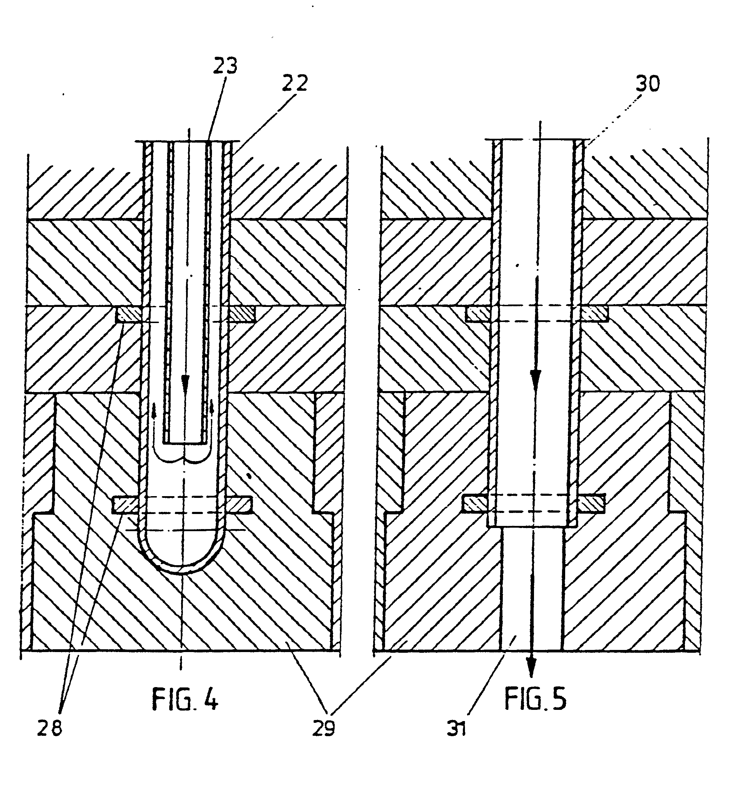

Die Ausgestaltung der Rohranker 12 an ihren unteren Enden ist in den Fig. 4 und 5 mehr ins einzelne gehend veranschaulicht. Fig. 4 zeigt einen Rohranker, der aus einem unten geschlossenen Außenrohr 22 und einem unten offenen Innenrohr 23 gebildet ist. Am entgegengesetzten Ende ist das Innenrohr 23 außerhalb der Blechhaube 13 über einen Anschlußstutzen 24 mit einer Ringleitung 25 für die Zufuhr eines Kühlgases verbunden. Ein weiterer Anschlußstutzen 26 steht mit dem Ringraum zwischen dem Innenrohr 23 und dem Außenrohr 22 in Verbindung und ist an eine Ringleitung 27 für den Abzug des Kühlgases angeschlossen.

Wie Fig. 4 weiter zeigt, sind am unteren Ende am Außen-rohr 22 zwei Ringscheiben 28 befestigt, die innerhalb der einzelnen Schichten des Ringmauerwerkes 11 formschlüssig eingebettet sind. Den unteren Abschluß des Ringmauerwerkes bildet ein einteiliger Körper 29 aus feuerfestem Material.

Die Rohranker können aber auch als unten offene Einfachrohre 30 ausgebildet sein, die über eine Bohrung 31 im unteren Abschlußkörper 29 mit dem Innenraum des Schachtkühlers in Verbindung stehen. In diesem Fall wird zur Kühlung der Rohranker 30 ein geringer Teil Kühlgas aus dem Kreislauf des Verfahrens benutzt, welches am unteren Ende des Ringmauerwerkes 11 in das Innere des Schachtkühlers eintritt und sich hier mit dem für den Trocken-prozeß von unten zugeführten Kühlgas vermischt.

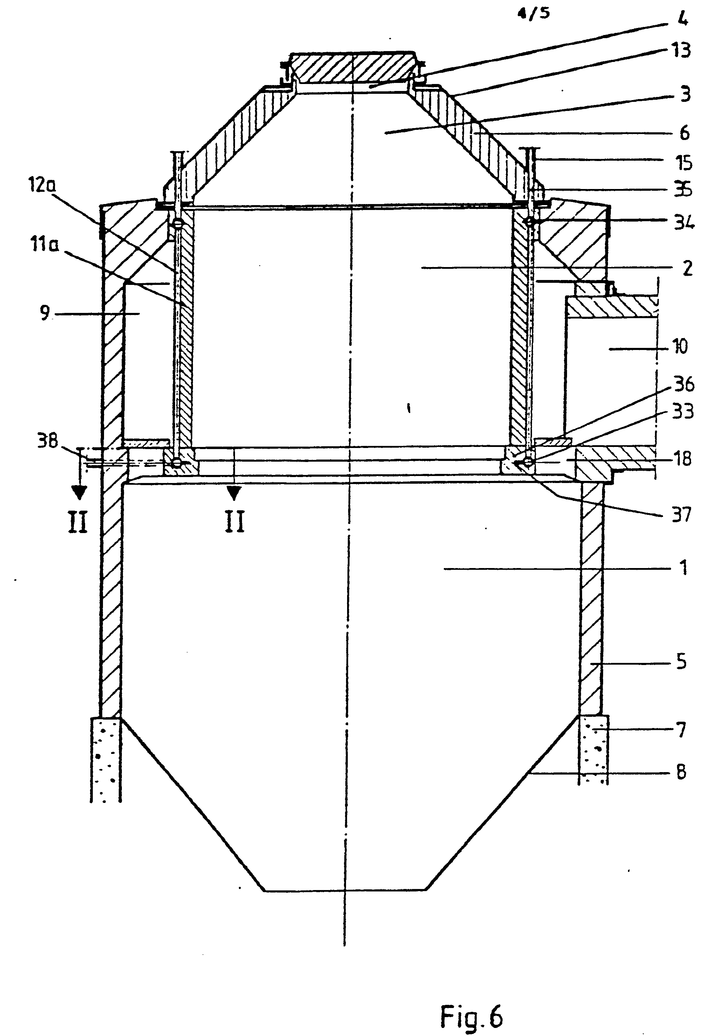

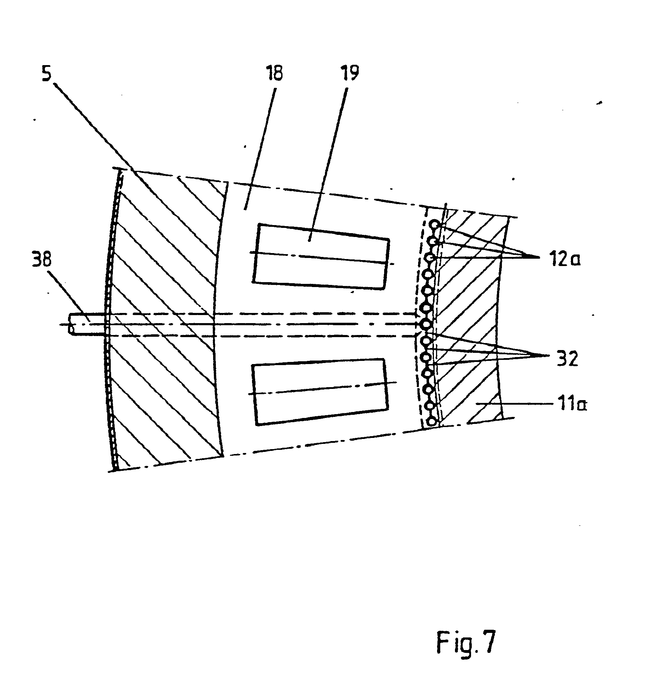

Bei dem in den Fig. 6 und 7 dargestellten Ausführungsbeispiel besteht in der grundsätzlichen Ausgestaltung des Schachtkühlers Übereinstimmung mit der vorbeschriebenen Ausführung. Dementsprechend wurden für die Fig. 6 und 7 für übereinstimmende Bauteile die Bezugszahlen der vorhergehenden Figuren beibehalten. Unterschiedlich gegenüber der vorhergehenden Ausführungsform ist, daß das Ringmauerwerk 11a an äußeren Rohrankern aufgehängt ist. Bei diesen Rohrankern handelt es sich um eng benachbarte Rohre 12a, die durch zwischen den Rohren auf ihrer ganzen Länge sich erstreckende Stege 32 zu einem geschlossenen Stahlring verbunden sind. Die unteren und oberen Enden der Rohre 12a sind an je ein Ringrohr 33 bzw. 34 angeschweißt. An den Ansatzstellen der Rohre 12a sind die Ringrohre 33 und 34 durchbohrt, so daß die Innenräume aller Rohre 12a an ihren Enden durch die Ringrohre 33 bzw. 34 miteinander verbunden sind, weshalb die Ringrohre auch als Sammler bezeichnet werden können.

An dem oberen Ringrohr 34 sind aufrechtstehende Einzelrohre 35 angeschweißt, die über den ganzen Umfang mit gleichem Abstand voneinander verteilt sind und als verlängerte Rohranker anzusehen sind. Diese nach oben ragenden Einzelrohre 35 sind mittels einer Halterung auf dem Mantelmauerwerk der Wandung 5 abgestützt, wie dies bei der vorstehend beschriebenen Ausführung der Fall ist und in Verbindung mit Fig. 3 beschrieben wurde.

Am unteren Ende des Ringmauerwerkes 11a befindet sich ein Kranz 36, der aus Formsteinen aufgebaut ist und in dem das Ringrohr 33 eingebettet ist. Zur Vergrößerung der Oberfläche für die Einleitung der Gewichtsbelastung ist an dem Ringrohr 33 ein Ansatz in Form eines Ringflansches 37 befestigt, beispielsweise durch Schweißen. Der untere Kranz 36 bildet bei dieser Ausführungsform das Auflager für das darüberliegende Ringmauerwerk 11a. Am oberen Ende geht das Ringmauerwerk 11a in eine nach außen sich erstreckende Erweiterung über, in der das obere Ringrohr 34 eingebunden ist.

Der aus den Rohren 12a und den Ringrohren 33 und 34 gebildete geschlossene Stahlring kann ohne Schwierigkeiten als Wärmetauscher in den Verdampferteil des Abhitzekessels des Schachtkühlers einbezogen werden. Zu diesem Zweck ist am unteren Ringrohr 33 wenigstens ein Rohran-schlußstutzen 38 vorgesehen. Für den Anschluß des Wärmetauschers an den Verdampferteil des Abhitzekessels brauchen lediglich die nach oben ragenden Einzelrohre 35 als Steigerohre weitergeführt und an den Verdampferteil angeschlossen zu werden. Soweit nur ein Teil der Einzelrohre als Steigerohre benötigt wird, werden die anderen Rohre als Blindrohre ausgeführt und nur zur Übertragung der Gewichtsbelastung in die vorstehend beschriebene Halterung herangezogen.

## Patentansprüche

1. Schachtkühler zum Trockenlöschen von Koks und anderen stückigen Brennstoffen mit einer aus feuerfesten Steinen gebildeten vertikalen Kammer, die einen oberen konischen Abschnitt mit einer zentralen Beschickungsöffnung und darunter einen im wesentlichen zylindrischen Abschnitt mit einer unteren Austragsöffnung aufweist, wobei ein im oberen Bereich des zylindrischen Abschnittes befindlicher Ringsammelkanal innen von einem ringförmigen Einbau begrenzt ist, der an seinem oberen Ende an der Wandung des zylindrischen Abschnittes verankert ist und an seinem unteren Ende über in Umfangsrichtung mit Abstand voneinander angeordneten radialen Stegen mit der Innenwandung des zylindrischen Abschnittes in Verbindung steht, wobei die Freiräume zwischen den Stegen Gasabzugsöffnungen bilden, dadurch gekennzeichnet, daß der ringförmige Einbau (11, 11a) einen aus Mauerwerk gebildeten Hohlzylinder darstellt und an zur Schachtachse parallelen Rohrankern (12, 12a) aufgehängt ist, die sich in Verbindung mit den Mauerwerk vom unteren Rand desselben nach oben erstrecken und an ihren oberen Enden durch das Mauerwerk (6) des konischen Abschnittes (3) geführt und an Halterungen befestigt sind, die sich auf dem oberen Rand des Mauerwerks (5) des zylindrischen Abschnittes abstützen.

2. Schachtkühler nach Anspruch 1, dadurch gekennzeichnet, daß die Eingänge der Gasabzugsöffnungen (19) etwa in der Ebene oder oberhalb des unteren Randes des Ringmauerwerkes (11, 11a) liegen.

3. Schachtkühler nach Anspruch 1 oder 2, bei dem der obere konische Abschnitt außen von einer Blechhaube umgeben ist, die an ihrem unteren Rand mit einer Auflagerplatte verbunden ist, dadurch gekennzeichnet, daß zur Aufnahme und Halterung der Rohranker (12, 35) in der Blechhaube (13) in Ausnehmungen senkrecht stehende Rohrstutzen (15) angebracht und an der Blechhaube (13) vorzugsweise durch Schweißen befestigt sind und daß die Rohranker (12, 35) jeweils mit einem äußeren Bund (17) auf den freien Enden der Rohrstutzen (15) aufliegen.

4. Schachtkühler nach Anspruch 3, dadurch gekennzeichnet, daß innerhalb der Blechhaube (13) Versteifungsrippen (16) an der Innenwand der Blechhaube (13), am Rohrstutzen (15) und an der Auflagerplatte (14) ange-schweißt sind.

5. Schachtkühler nach einem der Ansprüche 1 bis 4, dadurch gekennzeichnet, daß an den Rohrankern (12) an ihren unteren Enden zum Anbinden des Mauerwerkes Ansätze wie Ringscheiben (28) oder dergleichen vorzugsweise durch Schweißen befestigt sind.

6. Schachtkühler nach einem der Ansprüche 1 bis 5, dadurch gekennzeichnet, daß die Rohranker (12) aus einem unten geschlossenen Außenrohr (22) und einem etwa gleichlangen unten offenen Innenrohr (23) gebildet sind, wobei das obere Ende des Innenrohres (23) den Einlaß und das obere Ende des Außenrohres (22) den Auslaß für ein umwälzbares Kühlmittel wie Wasser oder Gas bildet.

7. Schachtkühler nach Anspruch 6, dadurch gekennzeichnet, daß die Einlässe der Innenrohre (23) an eine Ringsammelleitung (25) für die Zufuhr und die Auslässe der Außenrohre (22) an eine zweite Ringsammelleitung (27) für die Abfuhr des Kühlmittels angeschlossen sind.

8. Schachtkühler nach einem der Ansprüche 1 bis 5, dadurch gekennzeichnet, daß die Rohranker (12) unten offen sind und mit ihrem Ende jeweils an eine in das Innere der Kammer mündende Öffnung im Ringmauerwerk anschließen.

9. Schachtkühler nach einem der Ansprüche 1 bis 4, dadurch gekennzeichnet, daß die Rohranker (12a) an der Außenwand des Ringmauerwerkes (11a) anliegen.

10. Schachtkühler nach Anspruch 9, dadurch gekennzeichnet, daß die Rohranker (12a) eng nebeneinanderliegen und auf ihrer senkrechten Länge durch Stege (32) zu einem geschlossenen Stahlring verbunden sind und daß die unteren und oberen Enden der Einzelrohre an je ein Ringrohr (33 bzw. 34) angeschweißt sind, wobei die Wandungen der Ringrohre (33, 34) an den Rohransatzstellen Bohrungen aufweisen, und daß vom oberen Ringrohr (34) einzelne Rohranker (35) nach oben sich erstrecken und in den auf dem oberen Rand des Mantelmauerwerkes (5) ruhenden Halterungen abgestützt sind.

11. Schachtkühler nach Anspruch 10, dadurch gekennzeichnet, daß als unterer Abschluß des Ringmauerwerkes (11a) ein aus feuerfesten Formsteinen gebildeter Kranz (36) vorgesehen ist, in den die Enden der Rohranker (12a) und das Ringrohr (33) kraftschlüssig eingebunden

12. Schachtkühler nach Anspruch 11, dadurch gekennzeichnet, daß das untere Ringrohr (33) in waagerechter Richtung vorstehende Ansätze (37) in unterbrochener oder durchgehender Form aufweist.

13. Schachtkühler nach einem der Ansprüche 10 bis 12, dadurch gekennzeichnet, daß der Stahlring als Wärmetauscher in den Kreislauf des Kühlsystems des Schachtkühlers einbezogen ist und daß zu diesem Zweck am unteren Ringrohr (33) wenigstens ein Rohranschluß-stutzen (38) vorgesehen ist, während die vom oberen Ringrohr (34) ausgehenden Rohranker (35) an den Verdampferteil des Abhitzekessels angeschlossen sind.

## Claims

1. A shaft cooler for the dry quenching of coke and other piece fuels, the cooler having a vertical chamber made of refractory bricks and having a top conical part formed with a central charging opening and therebelow a substantially cylindrical part formed with a bottom discharge opening, an annular fitment bounding a ring collector main in the top zone of the cylindrical part, the fitment being anchored at its top end to the wall of the cylindrical part and communicating at its bottom end by way of peripherally spaced-apart radial webs with the inner wall of the cylindrical part, the between-webs spaces serving as gas discharge openings, characterised in that the annular fitment (11, 11a) is in the form of a hollow masonry cylinder and is suspended on tubular tie rods (12, 12a) which are disposed parallel to the shaft axis, extend upwards in connection with the masonry from the bottom edge and at their top ends extend through the masonry (6) of the conical part (3) and are secured to retaining means bearing on the top edge of the masonry (5) of the cylindrical part.

2. A shaft cooler according to claim 1, characterised in that the entries of the gas discharge openings (19) are disposed substantially in the plane or above the bottom edge of the annular masonry (11, 11a).

3. A shaft cooler according to claim 1 or 2 in which a sheet metal hood extends externally around the top conical part and is connected by way of its bottom edge to a support plate, characterised in that, to receive and retain the tubular tie rods (12, 35) in the sheet metal hood (13), tubular supports (15) disposed vertically in recesses are provided and are secured to the hood (13), preferably by welding, and the tubular tie rods (12, 35) each bear by way of an outer collar (17) on the free ends of the tubular support (15).

4. A shaft cooler according to claim 3, characterised in that stiffening ribs (16) are welded inside the hood (13) to the inside wall thereof, to the tubular support (15) and to the support plate (14).

5. A shaft cooler according to any of claims 1 to 4, characterised in that projections such as ring discs (28) or the like are secured, preferably by welding, to the bottom ends of the tubular tie rods (12) to secure the masonry.

6. A shaft cooler according to any of claims 1 - 5, characterised in that the tubular tie rods (12) take the form of an outer tube (22) closed at the bottom and an inner tube (23) which is open at the bottom and of substantially the same length as the outer tube (22), the top end of the inner tube (23) serving as the inlet for a circulating coolant, such as water or gas, and the top end of the outer tube (22) serving as outlet for such coolant.

7. A shaft cooler according to claim 6, characterised in that the inlets of the inner tubes (23) are connected to one ring main (25) for coolant supply and the outlets of the outer tube (22) are connected to a second ring main (27) for coolant removal.

8. A shaft cooler according to any of claims 1 to 5, characterised in that the tubular tie rods (12) are open at the bottom and merge by way of their ends into an opening in the ring masonry, the latter opening extending into the chamber interior.

9. A shaft cooler according to any of claims 1 - 4, characterised in that the tubular tie rods (12a) are disposed on the outer wall of the ring masonry (11a).

10. A shaft cooler according to claim 9, characterised in that the tubular tie rods (12a) are disposed closely adjacent one another and are interconnected over their vertical length by webs (32) to form a closed steel ring, and the bottom and top ends of the individual tubes are welded one each to a ring tube (33, 34) respectively, the walls of the ring tubes (33, 34) being formed with bores at the junctions with the tubes, and individual tubular tie rods (35) extend upwardly from the top ring tube (34) and are borne in retaining means resting on the top edge of the casing masonry (5).

11. A shaft cooler according to claim 10, characterised in that a ring (36) of refractory profiled bricks is provided as bottom closure of the ring masonry (11a) and the annular tube (33) and the ends of the tubular tie rods (12a) are operatively engaged in the said ring (36).

12. A shaft cooler according to claim 11, characterised in that the bottom ring tube (33) has in interrupted or continuous form horizontally extending projections (37).

13. A shaft cooler according to any of claims 10 - 12, characterised in that the steel ring is operative as a heat exchanger in the circuit of the shaft cooler cooling system and to this end the bottom ring tube (33) has at least one tube connection spigot (38) while the tubular tie rods (35) which start from the top ring tube (34) are connected to the evaporator part of the waste heat boiler.

## Revendications

1. Cheminée de refroidissement pour l'extinction à sec de coke et d'autres combustibles en morceaux, présentant une chambre verticale formée par des briques réfractaires et comprenant une partie supérieure tronconique percée d'une ouverture centrale de chargement, ainsi qu'une partie sousjacente sensiblement cylindrique et percée d'un orifice inférieur de déversement, un canal annulaire collecteur, situé dans la région supérieure de la partie cylindrique, étant délimité intérieurement par une partie annulaire incorporée qui est ancrée par son extrémité supérieure à la paroi de la partie cylindrique, et est reliée par son extrémité inférieure à la face interne de la paroi de la partie cylindrique, par l'intermédiaire de membrures radiales disposées à distance les unes des autres dans le sens periphérique, les espaces libres entre ces membrures formant des orifices d'évacuation d'un gaz, caractérisée par le fait que la partie annulaire incorporée (11, 11a) constitue un cylindre creux formé par une maçonnerie, et est suspendue à des tirants d'ancrage tubulaires (12, 12a) parallèles à l'axe de la cheminée, qui s'étendent vers le haut à partir du bord inférieur de la maçonnerie à laquelle ils sont reliés, qui traversent par leurs extrémités supérieures la maçonnerie (6) de la partie tronconique (3) et qui sont fixes a des supports en appui sur le bord supérieur de la maçonnerie (5) de la partie cylindrique.

2. Cheminée de refroidissement selon la revendication 1, caractérisée par le fait que les embouchures des orifices (19) d'évacuation du gaz se trouvent sensiblement dans le plan ou au-dessus du bord inférieur de la maçonnerie annulaire (11, 11a).

3. Cheminée de refroidissement selon la revendication 1 ou 2, dans laquelle la partie supérieure tronconique est entourée, extérieurement, par une coiffe en tôle reliée par son bord inférieur à une plaque d'appui, caractérisée par le fait que, en vue de recevoir et de supporter les tirants d'ancrage tubulaires (12, 35), des manchons (15) dressés verticalement sont installés dans des évidements de la coiffe en tôle (13) et sont fixés à cette coiffe en tôle (13), de préférence par soudage; et par le fait que lesdits tirants d'ancrage tubulaires (12, 35) portent à chaque fois par un collet externe (17) contre les extrémités libres desdits manchons (15).

4. Cheminée de refroidissement selon la revendication 3, caractérisée par le fait que, à l'intérieur de la coiffe en tôle (13), des nervures de rigidification (16) sont soudées à la face interne de la paroi de la coiffe en tôle (13), au manchon (15) et à la plaque d'appui (14).

5. Cheminée de refroidissement selon l'une des revendications 1 à 4, caractérisée par le fait que des appendices, tels que des disques annulaires (28) ou éléments analogues, sont fixés de préférence par soudage aux extrémités inférieures des tirants d'ancrage tubulaires (12), en vue de consolider la maçonnerie.

6. Cheminée de refroidissement selon l'une des revendications 1 à 5, caractérisée par le fait que les tirants d'ancrage tubulaires (12) se composent d'un tube externe (22) fermé en partie basse et d'un tube interne (23) sensiblement de même longueur et ouvert en partie basse, l'extrémité supérieure du tube interne (23) et l'extrémité supérieure du tube externe (22) formant respectivement l'admission et la sortie d'un fluide de refroidissement pouvant être mis en circulation, comme de l'eau ou un gaz.

7. Cheminée de refroidissement selon la revendication 6, caractérisée par le fait que les embouchures d'entrée des tubes internes (23) et les embouchures de sortie des tubes externes (22) sont respectivement raccordées à un conduit annulaire collecteur (25) et à un second conduit annulaire collecteur (27), assurant respectivement l'admission et l'évacuation du fluide de refroidissement.

8. Cheminée de refroidissement selon l'une des revendications 1 à 5, caractérisée par le fait que les tirants d'ancrage tubulaires (12) sont ouverts en partie basse et se raccordent à chaque fois, par leur extrémité, à un orifice pratiqué dans la maçonnerie annulaire et débouchant dans l'espace interne de la chambre.

9. Cheminée de refroidissement selon l'une des revendications 1 à 4, caractérisée par le fait que les tirants d'ancrage tubulaires (12a) sont appliqués contre la face externe de la paroi de la maçonnerie tubulaire (11a).

10. Cheminée de refroidissement selon la revendication 9, caractérisée par le fait que les tirants d'ancrage tubulaires (12a) sont étroitement juxtaposés,et sont reliés sur leur longueur verticale par l'intermédiaire de membrures (32), pour former un anneau d'acier fermé; par le fait que les extrémités inférieures et supérieures des tubes individuels sont soudées à un tube annulaire respectif (33; 34), les parois de ces tubes annulaires (33, 34) présentant des trous dans les zones de repiquage.desdits tubes; et par le fait que des tirants d'ancrage tubulaires individuels (35), s'étendant vers le haut à partir du tube annulaire supérieur (34), prennent appui dans les supports reposant sur le bord supérieur de la ceinture en maçonnerie (5).

11. Cheminée de refroidissement selon la revendication 10, caractérisée par le fait qu'il est prévu, en tant qu'obturation inférieure de la maçonnerie annulaire (11a), une couronne (36) constituée par des briques réfractaires, et dans laquelle les extrémités des tirants d'ancrage tubulaires (12a) et le tube annulaire (33) sont noyés mécaniquement.

12. Cheminée de refroidissement selon la revendication 11, caractérisée par le fait que le tube annulaire inférieur (33) comporte des appendices (37) saillant dans la direction horizontale,et se présentant sous une forme interrompue ou ininterrompue.

13. Cheminée de refroidissement selon l'une des revendications 10 à 12, caractérisée par le fait que l'anneau d'acier est incorporé,en tant qu'échangeur de chaleur, dans le circuit du systéme de refroidissement de la cheminée de refroidissement; et par le fait qu'au moins un manchon de raccordement (38) est prévu à cette fin sur le tube annulaire inférieur (33), cependant que les tirants d'ancrage tubulaires (35) partant du tube annulaire supérieur (34) sont raccordés à la partie d'évaporation de la cuve à chaleur perdue.

## FIG. 1

## FIG. 2

FIG. 3

FIG. 4

FIG.5

28            29       31

Fig.6

Fig. 7